# EUROPEAN PATENT SPECIFICATION

(11) **EP 2 967 096 B1**
(45) Date of publication and mention of the grant of the patent: **10.05.2017**
(21) Application number: 14713999.2
(22) Date of filing: 05.03.2014
(51) Int. Cl.: A23C 19/16, A23C 19/09, A23C 19/14

(54) **CHEESE ANTICAKE FOR ENHANCED MELT**
KLUMPENBILDUNGSSCHUTZ FÜR KÄSE FÜR VERBESSERTES SCHMELZVERHALTEN
AGENT ANTI-AGGLOMÉRANT POUR FROMAGE DESTINÉ À AMÉLIORER LE FONDU

(30) Priority: 15.03.2013 US 201313840020
(43) Date of publication of application: 20.01.2016
(73) Proprietor: Kraft Foods Group Brands LLC, Northfield, IL 60093 (US)
(72) Inventor: SMITH, Gary Francis, Glenview, Illinois 60025 (US); CHARINTRANOND, Wibul, Elmhurst, Illinois 60126 (US); GASS, Paul V., Glenview, Illinois 60025 (US); LEVINE, Brian E., Northbrook, IL 60062 (US); MCPHERSON, Andrew E., Mt. Prospect, Illinois 60056 (US)
(74) Representative: Gill Jennings & Every LLP
(86) International application number: PCT/US2014/020581
(87) International publication number: WO 2014/149727

(56) References cited:
- US-A- 5 626 893
- US-A1- 2006 210 694
- US-A1- 2011 244 105

## Description

### FIELD

The field relates generally to particulate cheese products, and in particular, to a starch-based anticake composition effective to provide enhanced melting of the particulate natural cheese.

### BACKGROUND

Shredded cheese is a growing component of the overall cheese market largely because such a product offers added consumer convenience in the preparation of a wide variety of products without the necessity of manually shredding a block of cheese with a cheese grater or similar device. Cheese shreds may be used to provide a melted cheese topping on a food item that is more uniformly distributed than would be possible using larger blocks or slices of the same cheese. Shredded cheeses, for example, can be used as toppings or ingredients in homemade dishes such as pizzas, nachos, casseroles, salads, and the like, as well as in restaurant food items or retail snack and meal products. Shredded cheeses can be used to provide a cheese component or a cheese sauce component to shelf stable meal kits, including pizza kits, taco kits, pasta meal kits, and salad kits to suggest but a few examples.

Ideally, cheese shreds should not agglomerate or stick to each other during storage and use, and should provide melting characteristics and organoleptic properties similar to their counterpart non-shredded cheeses. Agglomeration, however, can be a problem in both refrigerated and unrefrigerated cheese shreds. Unfortunately, to provide a non-agglomerating shredded cheese, it is usually necessary to incorporate significant amounts of anticaking agents in or on the shredded cheese. Many of these additives or topical ingredients are in the form of a powder that is sprinkled on, mixed in with, or otherwise applied to the cheese product at some point in the manufacturing or packaging process.

Prior anticaking agents are undesired in many instances with natural cheese products. For instance, prior anticaking agents tend to have adverse effects on melting of the cheese and result in other undesired organoleptic properties, such as a pasty, chalky, or dry mouthfeel. Anticaking agents tend to restrict cheese melt characteristics or cause excessive browning when melted, both of which are perceived negatively by the consumer. In some cases, the cheese product with prior anticake agents may melt unevenly or incompletely in comparison to a cheese product without the additive or topical ingredient. Additionally, many anticaking agents also impart an undesirable gritty texture to the shredded cheese product, and may also negatively impact the creamy mouth feel of a cheese product upon melting. Prior anticaking agents, in view of how they are prepared may affect shelf stability or long term storage of the natural cheese. Native starches, in view of how they are processed, may contain a microbial load, which contribute unwanted microorganisms to the cheese product.

US 2011/244105 A1 discloses a particulate cheese product having improved melting properties comprising a plurality of cheese pieces, each having an outer surface area and a dry coating comprising one or more dairy powders, effective as an anti-cake agent.

US 2006/210694 A1 discloses a mixture of 70% potato starch and 30% cellulose as being useful as anti-caking agent and providing an "excellent melt" effect at 1% application level.

US 5 626 893 A teaches mixtures comprising rice flour for the same purpose

### SUMMARY

A particulate natural cheese product including a modified starch or modified starch composition as an anticaking agent is provided in one aspect of the disclosure. In one approach, the particulate natural cheese product includes natural cheese in the form of a plurality of particulate natural cheese pieces each having an outer surface. The particulate natural cheese pieces have modified starch effective as an anticaking agent on, in, or applied to the cheese. The modified starch has a composition and is provided in an amount effective to form intact starch granules or fragments of starch granules having amylopectin, and substantially no amylose on the outer surface of the natural cheese pieces. The amounts and composition of the modified starch are effective to provide a uniform melt of the natural cheese and a uniform distribution of the amylopectin with substantially no intact starch granules or fragments and substantially no starch agglomerates of the amylopectin when the particulate natural cheese is melted. The starch, therefore, is effective to function as an anticake when the cheese pieces are in particulate form, but then the starch effectively disappears functionally during use when the cheese is melted.

In another aspect, a method of melting a particulate natural cheese product having a modified starch anticaking agent is provided. In one approach, the method includes providing natural cheese in the form of a plurality of particulate natural cheese pieces having outer surfaces thereof. The particulate natural cheese pieces have modified starch effective as an anticaking agent on, in, or applied to the outer surface. The amount and composition of the modified starch provides intact starch granules or fragments of starch granules including amylopectin and substantially no amylose on the outer surface of the cheese pieces. The particulate natural cheese is then heated for a time and at a temperature effective to melt the cheese into a smooth and homogeneous cheese product. The natural cheese has a uniform melt and a uniform distribution of the amylopectin with substantially no intact starch granules or starch fragments and substantially no starch agglomerates of the amylopectin when the shredded natural cheese is melted.

The particulate natural cheese product and methods of melting the particulate natural cheese product of the disclosure herein are advantageous because specific modified starches and effective amounts thereof are employed to manage the heating of the cheese yet minimize the effect the starch has on the melted product. By one approach, the amounts of the unique starch composition are effective both as an anticake to hinder and, in some cases, prevent sticking and agglomeration of the cheese pieces during normal handling and, at the same time, to provide process stability during the melting of the natural cheese, but yet disappear in the final melted product from an organoleptic and functional standpoint. The starches decrease in their functional contribution to the melted cheese by rupturing and degrading, such that the starch results in no textural, flavor, or other organoleptic contribution to the final melted product.

The amounts and select modified starches, in some approaches, have gelatinization and viscosity profiles relative to the protein aggregation temperatures of the natural cheese that allow for starch gelatinization to interrupt protein aggregation of the dairy protein in the cheese during melting and to contribute viscosity to the cheese melt, which lends stability to a cheese melting process using the natural cheese of the present disclosure. In other aspects, the amounts and starches used herein allows the starch to rupture and dissipate into the melted cheese at appropriate points during a melting process so that when starch gelatinization is no longer functionally needed, the modified starch does not result in undesirable texture or flavors in the final melted natural cheese.

### BRIEF DESCRIPTION OF THE DRAWINGS

Figure 1 is a starch pasting profile comparison of various anticakes.
Figures 2A-2F are micrographs of native potato starch anticake blend at various cheese sauce preparation temperatures.
Figure 3A-3F are micrographs of cross-linked, propylated waxy maize starch anticake at various cheese sauce preparation temperatures.
Figure 4A-4F are micrographs of lightly substituted waxy corn starch anticake at various cheese sauce preparation temperatures.

### DETAILED DESCRIPTION

A particulate natural cheese product with a modified starch anticaking agent or composition on, in, or applied to individual, natural cheese pieces and methods of melting a particulate natural cheese product having the modified starch anticaking agent are provided. In some approaches, the particulate natural cheese product may be provided as a cheese component or cheese sauce component in food, snack, and/or other types of meal kits. The present approach enables natural cheese in particulate form (e.g. shreds, pieces, chunks, cubes, crumbs, slices, grated, etc.) coated with or contacted with effective amounts of particular modified starches effective as an anticaking agent, to be melted by a consumer at home, such as on a stovetop or in a microwave, and to provide a melted cheese from particulate forms that are advantageously smooth, homogenous, and flavorful without phase separation. As used herein, particulate natural cheese generally refers to pieces of the natural cheese, such as shreds, cubes, pieces, chunks, strips, slices, bits, crumbs, curds, and the like. Unless otherwise specified, these terms are used interchangeably herein.

Prior approaches to prevent shredded or particulate cheese from agglomerating during handling have used anticaking agents in the form of starch powders that are sprinkled, mixed in with, or otherwise applied to the cheese product at some point in the manufacturing or packaging process. Common prior anticaking agents were normally native starches, such as native corn starch or native potato starch. These unmodified starch anticaking agents, while effective as an anticake to prevent sticking or agglomeration of cheese pieces or shreds, had a number of shortcomings. For one, they provide a less than desired melted cheese. As mentioned in the background, native starches may also contain a microbial load in view of how the starches are processed, which may contribute unwanted microorganisms to the cheese product. Unlike modified starches that may have a caustic, acidic, and/or heating step which would reduce or eliminate the microbial load, native starches are not subjected to such processing steps. In some cases, the use of native corn starch or native potato starch as anticaking agents can, in some instances, contribute a certain level of mold or yeast on the cheese, which greatly reduce the shelf life of a shredded cheese product.

To overcome the mold and yeast shortcomings associated with using unmodified or native starches as anticaking agents, highly modified starches were tried as anticaking agents for shredded cheese. Highly modified starches have undergone several processing steps such as separation, chemical modification, pH treatments and various washing steps, which tend to provide a more stable product in terms microbial load. Shredded cheese coated with such highly modified starch (such as, for example, a hydroxypropylated distarch phosphate, Rezista^{®} (Tate & Lyle, Inc., Decatur, IL), Accucoat^{®}(Cargill, Incorporated, Minneapolis, MN) or Farinex (Abeve, Australia)) resulted in improved shelf life compared to shredded cheese coated with unmodified or native starch. However, the use of such highly modified starches resulted in poor organoleptic properties such as starchy off-flavors and grainy textures, especially when the cheese pieces were melted.

The present approach using modified starches or starch compositions with unique characteristics; however, surprisingly results in the opposite outcome and provides a particulate cheese product with an effective anticake that also disappears functionally once heated, melted, or fully melted. Thus, the present approach provides a particulate natural cheese product using effective amounts of specific modified starch compositions as an anticaking agent, yet without any of the disadvantages associated with prior anticaking agents, such as melt restriction and starchy off-flavors.

The specific amounts and modified starch anticake compositions of the present disclosure function as an effective anticake to limit, and in some cases, hinder particulate natural cheese from agglomerating or sticking during handling and packaging, but at the same time, and contrary to prior anticakes, enhance the melting of the natural cheese, but then disappear in the final melted or heated cheese product so as to not provide any adverse organoleptic characteristics or without negatively impacting flavor release. In other words, the select modified starches, which are unique lightly modified starch compositions, provide functionality as an anticake during handling and packaging, manage melting and heating during processing, but disappear with respect to their functionality in the final melted, heated, or fully melted product.

In one aspect, a particulate natural cheese product is described herein including about 0.1 to about 10 percent, (in other approaches, about 2 to about 6 percent, in yet other approaches, about 2 to about 4 percent) of a lightly modified starch or starch composition as an anticaking agent in, on, or applied to natural cheese pieces, such topically applied as on the outer surface of shreds, crumbs, slices, cubes, pieces, curds, and the like. The modified starch has a composition, form, and is provided in an amount effective to form intact starch granules or fragments of starch granules having amylopectin, and substantially no amylose in, on, or applied to the natural cheese pieces in order to function as an anticake prior to the cheese being melted. In addition, the amounts, form, and specific composition of the lightly modified starch is also effective at managing heating of the cheese to provide a uniform melt of the natural cheese and a uniform distribution of the amylopectin with substantially no intact starch granules and substantially no starch agglomerates of the amylopectin when the particulate natural cheese is subsequently melted. The starch, therefore, is effective to function as an anticake when the cheese pieces are in particulate form, the starch then effectively manages cheese melting, but then the starch effectively disappears functionally during use when the cheese is melted. As used herein, unless otherwise specified, starch granules include both granules of the starch and/or fragments of a starch granule.

Without wishing to be bound by any particular theory, it is believed that when the selected lightly modified starch granules and/or granule fragments and the natural cheese pieces are being heated, the starch granules or fragments thereof are configured to imbibe or absorb moisture and swell at the appropriate time when the dairy proteins are at risk of beginning to agglomerate and separate. The starch effectively manages the viscosity of the melted natural cheese to provide in-process stability during melting. The gelatinization temperature and viscosity contribution profile of the modified starch composition are compatible with the natural cheese melting process and intervene at the point in the heating process where the natural cheese is in most need of stabilization. At this point, the modified starch granules are sufficiently gelatinized to contribute viscosity to provide in-process stability.

In other approaches, it is believed that the swelling and gelatinization of the starch coincides with and, in some approaches, precedes temperatures at which protein from the natural cheese begins to aggregate and coagulate during heating, which will be referred to herein as the protein coagulation or protein aggregation temperature or temperature zone of the cheese. It is believed that the gelatinized lightly modified starch compositions of the present disclosure are effective to interrupt dairy protein aggregation or coagulation during the melting or heating process, allowing the natural cheese with the starch compositions of the present disclosure to melt smoothly and homogenously. During protein coagulation in the cheese melting process, moisture is dispelled by the protein, resulting in the separation of protein aggregates and additional moisture in the melting cheese, which tends to lead to a non-homogenous, and unsmooth sauce in some instances. Such change in processing conditions may result in instability of the melting natural cheese. In the cheese of the present disclosure, however, the overlap of the starch gelatinization and protein aggregation temperatures and, in some approaches, the gelatinization of the starch before the protein aggregation temperature, provides the beneficial effect of interrupting protein coagulation, management of water, and maintaining stability in the melted cheese to result in a smooth cheese sauce. The protein aggregation temperatures of the natural cheese tend to form a high risk point or threshold of instability in the natural cheese during melting. The amounts and compositions of the starches herein, among other features, manage and reduce this instability at the point of highest risk to the cheese during the melt process. Among other features, the gelatinization of the starch at the same time or preceding the instability point of the dairy proteins aids in managing the cheese through these zones of instability.

Once the starches of the present disclosure have gelatinized and are swollen, the starch begins to rupture, decreasing the viscosity contribution of the starch. In the case of granular starches, the loss in viscosity is believed to be associated with loss of starch granule integrity. The viscosity profile of the starches herein are such that the starch degradation and viscosity changes advantageously overlap with the protein aggregation temperatures of the heated cheese, which is at the point of highest risk for protein aggregation, so that the starch helps stabilize the cheese melt to adequately manage fat and moisture. The viscosity contribution of the starch during a period of instability in the dairy proteins during cheese melting, combined with the rupturing of the starch granule once viscosity contribution is no longer needed for stability, yields a finished product without the aforementioned defects.

In some approaches, it is believed that such functionality of the starch may also be related to select levels of amylopectin and amylose in the starch and starch granule that are effective to quickly degrade and dissipate. The modified starch provides intact starch granules or granule fragments including amylopectin and substantially no amylose in or on the outer surface of the natural cheese particulate pieces to function as an anticake. When the particulate natural cheese is melted, however, the modified starches and compositions of this disclosure provide a uniform distribution of the amylopectin with substantially no intact starch granules or fragments and substantially no starch agglomerates of amylopectin so that the starch effectively disappears in the final product providing substantially no organoleptic properties.

Turning to more of the specifics, the present disclosure provides a particulate natural cheese product including a plurality of natural cheese pieces having certain modified starch compositions on, in, or applied to the particulate natural cheese pieces. The modified starch composition is effective as an anticaking agent, yet without providing undesirable textures, flavors, or other organoleptic characteristics in the final product typically associated with prior anticaking agents. In one approach, the particulate natural cheese product comprises intact starch granules or granule fragments between about 0.1 to about 120 microns in size, in other approaches, about 1 to about 120 microns, in yet other approaches, about 5 to about 35 microns in size effective for an anticaking agent on the natural cheese. Below 1 micron, the starch may be fragments or agglomerates of fragments.

The modified starch is also effective to enhance the melting of the particulate natural cheese. In one approach, the modified starch is on the outer surface of the particulate natural cheese pieces, and provides intact starch granules or granule fragments including amylopectin and substantially no amylose prior to heating or melting. The modified starch is effective to provide a uniform melt and a uniform distribution of the amylopectin in the melted natural cheese with substantially no intact starch granules and substantially no starch agglomerates of the amylopectin when the shredded natural cheese is melted. As used herein, heated and melted cheese generally refers to a cheese in which the various pieces are melted into a smooth, homogenous mass with little to no shred identity. It will be appreciated that temperatures and times to achieve a melted cheese may vary depending on the size of the piece and type of cheese. In some approaches the modified starch has less than about 0.1 weight percent amylose, and in some cases, no amylose, so that the melted natural cheese has substantially no amylose therein. In yet other approaches, the amylopectin and amylose from the modified starch are selected to be in a form and in a ratio within the melted natural cheese effective to provide substantially no texture, viscosity, or flavor to the melted natural cheese.

Suitable starch and compositions thereof may include any modified starches treated to provide the desired processing functionality of viscosity and water management during melting, yet disappear functionally in the final product as discussed above with the unique distribution of amylopectin and amylose. The modified starch may be derived from any suitable starch source, such as corn, wheat, potato, tapioca, waxy maize, sago, rice, and the like. In one approach, the starch may be derived from waxy starches, such as waxy maize, waxy rice, and waxy sorghum, or root starches such as potato, sweet potato, yams, taro and arrow root. Any suitable modified starch or combinations thereof may be used.

In one approach, the modified starch may be substituted starches. The modified substituted starch may be lightly substituted, such as to a degree of substitution less than about 0.2 D.S., or from about 0.1 to about 0.2 D.S., or in some cases less than about 0.1 D.S. The degree of substitution may be such that the starch does not need to be cross-linked during the modification process. Substitution may lower gelatinization temperature, resulting in a starch with a tendency to develop viscosity earlier in the heating process compared to the unmodified parent starch, starches with other modifications such as cross-linking, or starches with higher gelatinization temperatures. In some approaches herein, the modified starches may have a gelatinization temperature of about 65°C to about 75°C. The lightly substituted starch is less resistant to shear, such that the starch granule may be degraded or ruptured by the application of shear. In some approaches, the lightly substituted starch granules may rupture when swollen, without little or no agitation. In yet other approaches, the starch granules tend to be substantially ruptured and only a few or substantially only a few intact and swollen starch granules remain intact in a cooked paste or slurry of the starch. In one aspect, the starch may be a mono-substituted waxy corn starch having one hydroxypropyl group substituted for hydrogen in the starch to form a starch ester.

Without wishing to be bound by any particular theory, it is believed that gelatinized starches herein in melted cheese interrupts protein coagulation. In one approach, the modified starch has a peak gelatinization temperature overlapping or preceding the protein aggregation temperature of the natural cheese effective to interrupt protein aggregation during melting to provide a smoothly melted cheese. The starches and compositions herein have select gelatinization profiles, among other features, relative to the natural cheeses. For example and in one approach, the peak gelatinization temperature of the modified starch is within about +/-6°C (+/- 10°F) of the protein aggregation temperature of the natural cheese. In yet another approach, the ratio of the peak gelatinization temperature of the modified starch to the protein aggregation temperature of the natural cheese may be about 1:0.8 to about 1:1.3, in other approaches, about 1:1 to about 1:1.2, and in yet other approaches about 1:1 to about 1:1.2. In another approach, the peak gelatinization temperature of the modified starch is from about 60°C (140°F) to about 66°C (150°F), and the natural cheese has a protein aggregation temperature of about 49°C (120°F) to about 82°C (180°F) and in other approaches, about 60°C (140°F) to about 82°C (180°F). In some approaches, the modified starch may be fully gelatinized by about 77°C (170°F). In other approaches, a temperature differential between initial starch gelatinization and full gelatinization is about 6°C (10°F) to about 17°C (30°F). In yet other approaches, the gelatinization of the modified starch occurs over a 6°C (10°F) temperature span, which may overlap with or precede the protein aggregation temperatures of the natural cheese.

Suitable natural cheeses for preparing the particulate natural cheese product herein may be pasteurized or unpasteurized cheese made by curdling milk by some combination of rennet, rennet substitutes, and acidification. The milk may be unfiltered or filtered, such ultrafiltered milk. The natural cheese used in the present disclosure may be freshly made or aged. Natural cheese types may include, for example, cheddar, gouda, mozzarella, provolone, brie, and any other suitable natural cheese. The cheese may also include natural cheese and processed cheese blends or blended cheese with non-emulsified cheeses of various fat levels as needed for a particular application. A mixture of two or more natural cheeses may be selected to provide the desired flavor profile of the particulate natural cheese product. The natural cheese includes casein and essentially no whey. The casein is generally non-calcium reduced casein and tends to include about 200 to about 350 ppm of calcium per percent of casein and, in some approaches, about 300 to about 350 ppm of calcium per percent of casein.

In one approach the particulate natural cheese product may include about 80 to about 99 weight percent particulate natural cheese (in other approaches, about 90 to about 99 weight percent cheese, and in other approaches, about 95 to about 99 percent) and about 0.1 to about 10 weight percent modified starch (in other approaches, about 2 to about 5 percent modified starch). In another approach, a ratio by weight of particulate cheese to modified starch is about 9:1 to about 99:1 and, in other approaches, about 19:1 to about 48:1 and in some cases, about 24:1. The modified starch may be applied to, in, or on the outer surface of the cheese. For instance and in one approach, the starch may be sprinkled or topically applied on the outer surface of the cheese. In other approaches, the starch may be applied to a cheese curd, and then the cheese curd may be formed into a block or other cheese mass effectively blending the starch into the cheese mass. The block may then be ground or otherwise made into particulate pieces wherein the starch may be in the cheese and on the surface of the cheese at the same time.

In one approach, the modified starch composition is effective to provide less than about 50 intact starch granules or granule fragments, in other approaches less than about 10 intact starch granules or granule fragments of amylopectin per about 900 mm² of melted natural cheese as determined by Lugol's iodine stain at about 20x magnification such that there are substantially no intact starch granules or fragments of amylopectin in the melted natural cheese. The melted natural cheese may be diluted 6 to 7 fold using Lugol's iodine stain. In yet other approaches the melted natural cheese has substantially no intact starch granules or fragments. As appreciated by those of ordinary skill, Lugol's iodine stain or solution provides an easily identifiable method of measuring starch granules as they appear as defined dark spots under magnification. In yet other approaches, the melted natural cheese contains no intact starch granules, no starch agglomerates of amylopectin, and no or substantially no amylose, such as less than about 0.1 weight percent amylose.

In other approaches, it is believed that select ratios of the amylopectin to amylose provided by the modified starch composition are effective in achieving the unique ability to function as an anticake agent, provide improved processing during melting, and disappear in the final product to provide substantially no final textural and flavor characteristics to the melted cheese. For instance and in another approach, the melted natural cheese has a ratio of amylopectin to amylose from about 20 to about 200, in other approaches, about 20 to about 100, and in yet other approaches, about 50 to about 100. In some approaches, melted natural cheese has no amylose at all.

In another aspect of the particulate natural cheese product herein, the amylopectin is uniformly distributed when the particulate natural cheese is melted. Thus, the amylopectin is not agglomerated, aggregated, or pooled in various portions of the melted natural cheese, but rather uniformly or consistently blended in or throughout the melted natural cheese. As shown in the Examples below, this can easily be identified via a Lugol's stain analysis where rust colored amylopectin is visible as being uniformly distributed throughout the melted cheese.

Turning now to the method of melting a particulate cheese product having a modified starch anticaking agent therewith, by one approach, the method includes providing a particulate natural cheese having a plurality of natural cheese pieces having an outer surface thereof. The particulate natural cheese pieces have a modified starch or starch composition effective as an anticaking agent in, on, or applied thereto. The modified starch provides intact starch granules or granule fragments including amylopectin and substantially no amylose on an outer surface of the cheese shreds prior to melting. The particulate cheese may be blended with a fluid and then heated for a time and temperature effective to melt the cheese into a melted mixture with a uniform melt of the natural cheese and with a uniform distribution of the amylopectin. When melted, there will be substantially no intact starch granules or fragments and substantially no starch agglomerates of the amylopectin in the melted cheese.

The melted natural cheese mixture may be prepared by combining the shredded natural cheese with a fluid, such as water or milk, including whole, skim and 2% milk, or any other suitable liquid. The blend may be added into a saucepan for stovetop heating or into a microwave safe container for microwave heating. In some approaches, the shredded natural cheese is melted without the addition of a liquid.

When prepared on the stovetop, the contents of the saucepan may be stirred during the heating process. For microwave preparation, the mixture may be heated in a 1500 W microwave for a first duration of time, such as for about 45 seconds, removed from the microwave and stirred. The mixture may be placed back into the microwave and heated for an additional duration of time, such as about 45 additional seconds, and then stirred. In other approaches, the shredded natural cheese is melted without stirring. Other times and melting conditions may also be used depending on the type of cheese shreds.

The amounts and compositions of the modified starches herein have the advantages of reaching gelatinization temperatures and providing a viscosity contribution to the melted cheese even with intermittent microwave heating and stirring. The modified starch is well suited for use in the preparation of convenience foods where various heating options, including microwave heating, may be used by the consumer.

In one approach, the peak gelatinization temperature of the modified starch overlaps or precedes the protein aggregation temperature of the natural cheese, allowing gelatinized starch granules to interrupt protein aggregation during the cheese melting process. The use of modified starches and compositions herein with peak gelatinization which overlaps and/or precedes the protein aggregation temperatures of the natural cheese allows for the gelatinized starch to be present at point of highest risk for protein agglomeration during cheese melting to interrupt protein agglomeration, manage water released during this time, and to provide a smoothly melted cheese.

In one approach of the methods, the peak gelatinization temperature of the modified starch is within about +/- 6°C (+/-10°F) of the protein aggregation temperatures of the natural cheese. In other approaches, the ratio of the peak gelatinization temperature of the modified starch to the protein aggregation temperatures of the natural cheese is about 1.1:1.2. The proximity and overlap of the peak gelatinization temperature of the modified starch to the point at which the proteins are at risk for aggregation allows for the gelatinized starch to be present at the time of cheese melting to interrupt such protein agglomeration.

In another approach, the modified starch is fully gelatinized by about 77°C (170°F), for example by about 71°C (160°F), or by about 66°C (150°F). In one approach the peak gelatinization temperature of the modified starch is about 60°C (140°F) to about 66°C (150°F), and the natural cheese has a protein aggregation temperature of about 49°C (120°F) to about 82°C (180°F) (and in some cases, about 60°C (140°F) to about 82°C (180°F)). Modified starch which gelatinizes early in, or coinciding with the highest risk for protein aggregation allows for gelatinized starch granules to be readily available by the time the cheese starts to melt, or shortly thereafter, to offer a stabilizing viscosity contribution to ensure smooth melting of the natural cheese.

Once the gelatinized starch granules have provided stability to the cheese melting process, the fully gelatinized starch begins to rupture and dissipate throughout the melted natural cheese. As full gelatinization of the select starches herein is achieved by about 77°C (170°F), for example by about 71°C (160°F), or by about 66°C (150°F), the gelatinized starch then begins to degrade once full gelatinization is achieved at about 66°C (150°F), about 71°C (160°F), or about 77°C (170°F). The rupture of the modified starch granules allows the amylopectin in the starch granules to dissipate into the melted natural cheese, to provide a uniform distribution of amylopectin with substantially no intact starch granules, and without starch agglomerates of amylopectin in the natural cheese. Uniform distribution of amylopectin from ruptured granules can be achieved without stirring or other agitation. The modified starch has less than about 0.1 weight percent amylose. In some approaches, the starch is fully degraded by about 77°C (170°F), and amylopectin is uniformly dispersed by 77°C (170°F), such as by 71°C (160°F).

As used herein, the discussion of an ingredient being absent from, not in significant levels, not present, having substantially no, not included in, and/or present in essentially no amounts in the cheese generally means that the ingredient is present at about 0.5 percent or less, in other approaches, about 0.1 percent or less, in yet other approaches, about 0.05 percent or less, and in some cases not present at all.

A better understanding of the present embodiment and its many advantages may be clarified with the following examples. The following examples are illustrative and not limiting thereof in either scope or spirit. Those skilled in the art will readily understand that variations of the components, methods, steps, and devices described in these examples can be used. Unless noted otherwise, all percentages and parts noted in this disclosure are by weight.

### EXAMPLES

### EXAMPLE 1

A cheese sauce was prepared using cheddar cheese shreds coated with modified starch anticake and ingredients in the amounts as shown in Table 1 below. Cheddar cheese shreds coated with lightly substituted, waxy corn starch (Shur-FIL, Tate & Lyle, Inc., Decatur, IL), and sodium chloride for flavor were combined into a saucepan and heated over medium heat with constant stirring using a spoon.

**Table 1**

| **Ingredients** | **% wt** |
|---|---|
| Cheddar Cheese Shreds | 69.0 |
| Inventive lightly substituted, waxy corn starch | 2.1 |
| Sodium Chloride | 0.5 |
| Water | 28.4 |

Shred identity was visible initially. As the mixture was heated, the shreds softened and began to melt. At about 60°C (140°F), the starch gelatinized and provided a viscosity increase to the cheese mixture. The mixture was heated and stirred until it began to boil, at which point the shreds were fully melted and provided a homogenous cheese sauce.

At this point, the cheese sauce was evaluated and found to have improved characteristics when compared to Comparative Examples 1 and 2 below. Compared to cheese sauce made using uncoated cheese shreds of Comparative Example 1, the cheese sauce prepared with shredded cheese coated with the about 2 percent of the inventive lightly substituted waxy corn starch provided a homogenous cheese sauce. Compared to the cheese sauce of Comparative Example 2 made using cheese shreds coated with native potato starch, this cheese sauce provided an improved, truer cheddar cheese flavor, smoother texture, and improved flavor due to a lack of a starchy off-flavor.

The cheese sauce prepared using shredded cheese coated with lightly substituted waxy corn starch was stirred into previously cooked pasta where it continued to provide a homogenous mixture without phase separation and with a true cheddar cheese flavor.

### COMPARATIVE EXAMPLE 1

A cheese sauce was prepared by the method described in Example 1, using the uncoated cheddar cheese shreds and ingredients in the amounts as shown in Table 2 below.

**Table 2**

| **Ingredients** | **% wt** |
|---|---|
| Cheddar Cheese Shreds | 71.1 |
| Sodium Chloride | 0.5 |
| Water | 28.4 |

In this example, the cheese shreds are uncoated. The resulting cheese sauce did not result in a homogenous cheese sauce with a smooth texture and resulted in a sauce that exhibited phase separation.

### COMPARATIVE EXAMPLE 2

A cheese sauce was prepared using cheese shreds coated with a control anticake blend instead of a lightly substituted modified starch and ingredients in the amounts shown in Table 1 above. The control anticake blend comprises native potato starch, cellulose, and calcium sulfate in a ratio of about 70:20:10 by weight respectively (International Fiber Corporation, North Tonawanda, NY).

The resulting cheese sauce made from cheese shreds coated with native potato starch had lower quality cheddar cheese flavor, a starchy-off flavor, and a texture that was less smooth than the cheese sauce of Example 1.

### EXAMPLE 2

A cheese sauce was prepared as described in Example 1, substituting whole, skim, and 2 percent milk on separate occasions instead of water. The resulting sauce had the similar improved characteristics seen in Example 1, and was milkier and creamier in flavor.

### EXAMPLE 3

Cheese sauces were prepared with the ingredients and amounts as described in Examples 1 and 2, except the cheese sauces were prepared by heating the mixture in a microwave instead of on a stovetop. The mixtures were heated in a 1500 W microwave for about 45 seconds, then removed and stirred. The mixture was placed back into the microwave and heated for an additional 45 seconds, removed and stirred again.

The sauce prepared by microwaving and stirring shredded cheese coated with lightly substituted waxy corn starch resulted in a homogenous sauce with the improved characteristics seen in Example 1, and again reflected in Example 2 in a milkier and creamier sauce. This Example illustrates that the enhanced melting of the cheese shreds coated with lightly substituted waxy corn starch can be achieved using a microwave, indicating that the lightly substituted waxy corn starch coating the cheese shreds can be activated using microwave heating, and/or intermittent heating, and is well suited for various home preparation scenarios.

### EXAMPLE 4

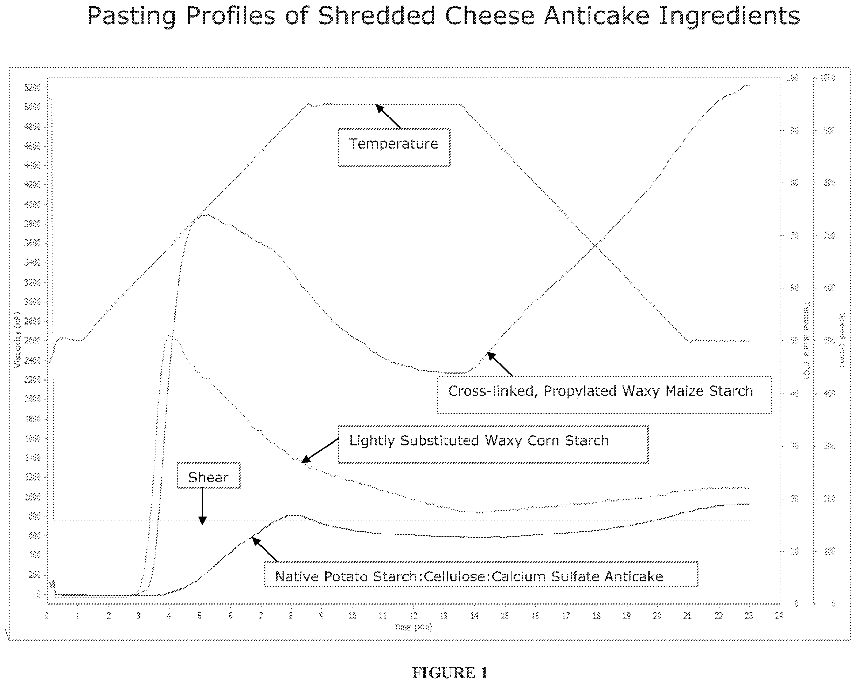

This Example compares the starch pasting or gelatinization profiles of the starches identified in Table 3 below. The pasting or gelatinization profiles for the starches in Table 3 were generated using a 2Standard2 testing profile available using a Rapid Visco™ Analyzer from Newport Scientific Pty Ltd, Australia. Starches were run at about 8% w/w basis in water. Results are shown in the graph of FIG 1.

**Table 3**

| **Anticake** | **Starch Type** |
|---|---|
| A - Example of Inventive Modified Starch | Shur-FIL (lightly substituted waxy corn starch, Tate & Lyle, Inc., Decatur, IL) |
| B | Rezista^{®} HV (cross-linked and propylated waxy maize starch, Tate & Lyle, Inc., Decatur, IL) |
| C-Comparative | JustFiber^{®} 70 CSP (native potato starch, cellulose, calcium sulfate, 70:20:10, International Fiber Corporation, North Tonawanda, NY) |

As seen in FIG.1, Comparative Anticake C develops viscosity slower than Anticake A or Anticake B. Comparative Anticake C begins to gelatinize around 140°F (60°C), and is fully gelatinized by about 203°F (95°C). Anticake B begins to gelatinize around 150°F (66°C), and is fully gelatinized by 165°F (74°C). Anticake A begins to gelatinize around 140°F (60°C) and is fully gelatinized and swollen by 150°F (66°C). Anticake A has both lower gelatinization temperature for sooner viscosity development, and shorter temperature range for full gelatinization when compared to Anticake B or C.

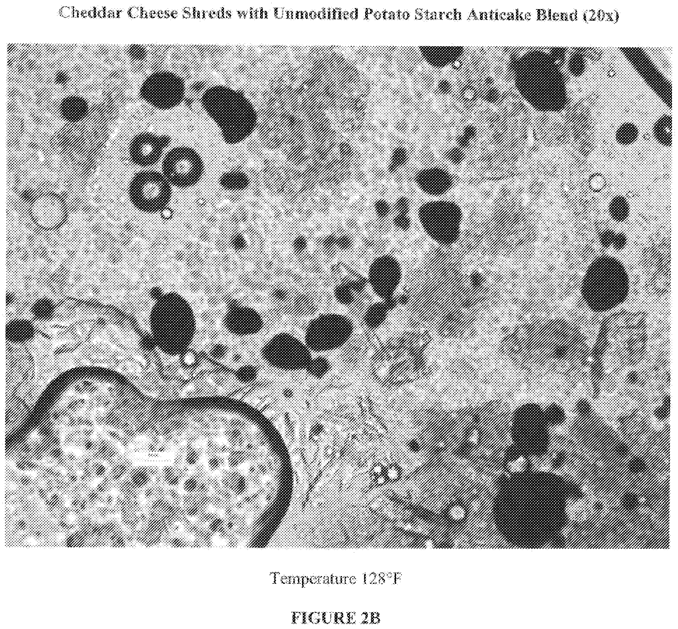

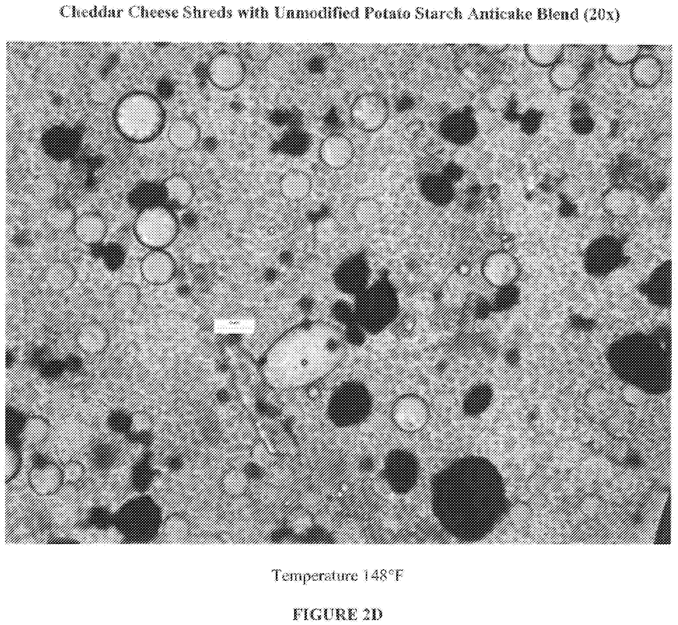

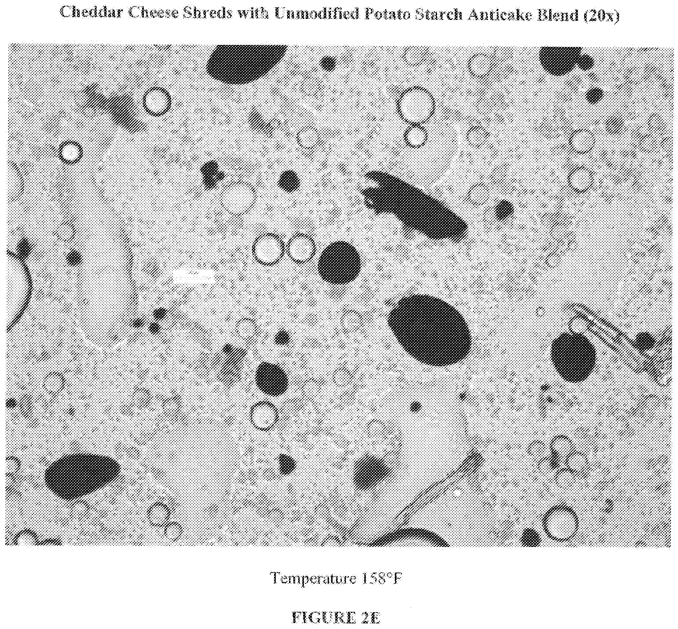

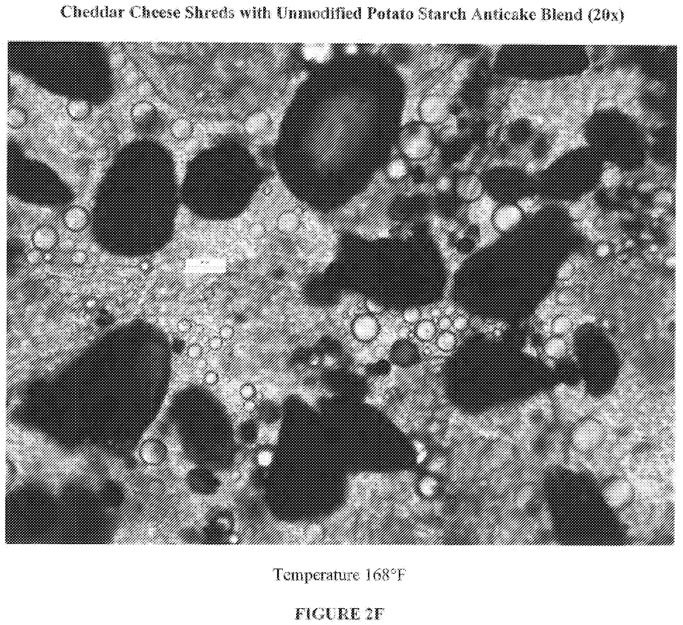

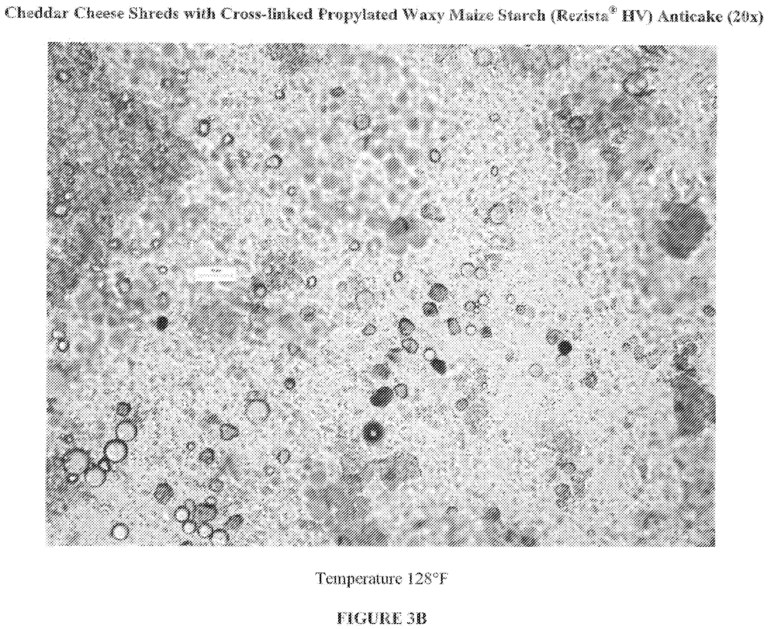

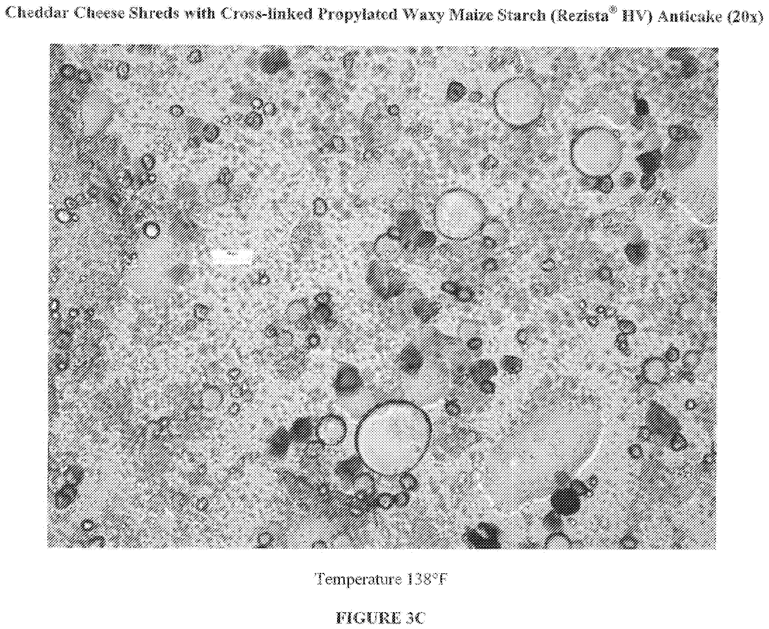

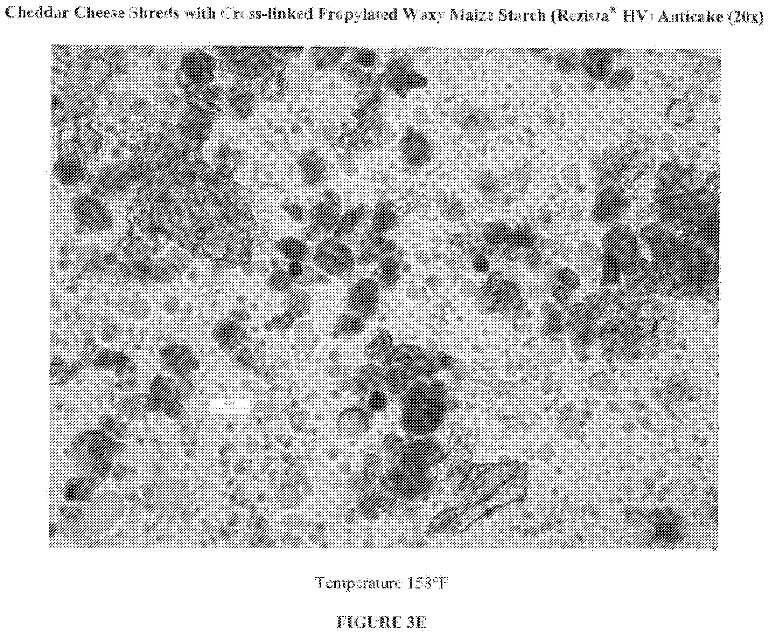

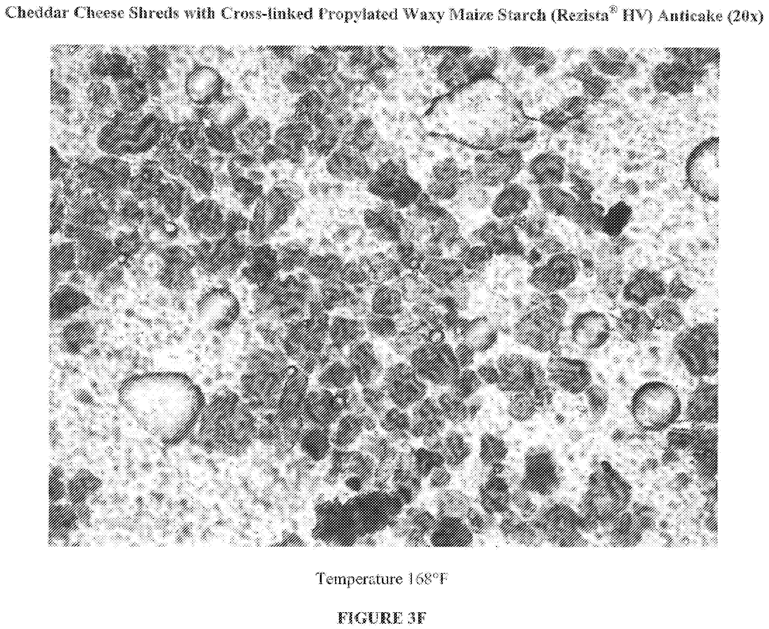

The viscosity of Anticake A begins to decrease sooner than viscosity of either Anticake B or Comparative Anticake C. Because Anticake A reaches full gelatinization at a lower temperature than either Anticake B or C, Anticake the starch granule breakdown begins sooner in Anticake A. The final viscosity of Anticake A is lower than Anticake B, indicating a more complete starch granule breakdown in Anticake A. Anticake A has both an earlier granule breakdown and a more complete granule breakdown when compared to Anticake B or C. (As seen in FIG. 2F and 3F, the starch granules in Anticakes C and B respectively, have not broken down by 76°C (168°F)).

Anticake B has a gelatinization temperature that is higher than Anticake A, resulting in viscosity development later than Anticake A. The viscosity contribution of Anticake B is higher than Anticake A, and remains higher than Anticake A, indicating less starch granule breakdown than Anticake A.

Anticake C provides slower viscosity development and lower viscosity contribution when compared to Anticake A or B. Once Anticake C reaches full gelatinization, there is little viscosity decrease, indicating little starch granule breakdown.

FIG. 1 illustrates Anticake A's unique properties of lower gelatinization temperature for sooner viscosity development, shorter temperature range for full gelatinization, and complete and/or sooner starch granule breakdown of Anticake A as compared to Anticake B or C.

### EXAMPLE 5

This Example compares micrographs from a sample of cheese sauce prepared using natural cheese shreds coated with each of the anticakes listed in Table 3 above, at the following temperatures: 44°C (112°F), 53°C (128°F), 59°C (138°F), 64°C (148°F), 70°C (158°F), and 76°C (168°F).

One lot of cheddar cheese was shredded. Shredded cheese and each of the anticakes in Table 3 were combined in a rotating drum at a ratio of 24:1 by weight of shredded cheese to anticake on separate occasions to prepare cheddar cheese shreds coated with each of Anticakes A, B, and C.

Specimen cups containing 2.5 grams of shredded cheese coated with each of Anticake A, B, or C combined with 1.0 grams of water were prepared. Specimen cups containing shredded cheese coated with Anticake A, B, and C were placed into each of 44°C (112°F), 53°C (128°F), 59°C (138°F), 64°C (148°F), 70°C (158°F), and 76°C (168°F) recirculating water baths, held for 5 minutes, and removed.

Upon removal from the water bath, each sample was opened and approximately one drop of the cheese mixture was placed on a glass microscope slide, combined with Lugol's iodine stain, and covered with a 22 x 40 mm glass cover slip for viewing under 20x magnification.

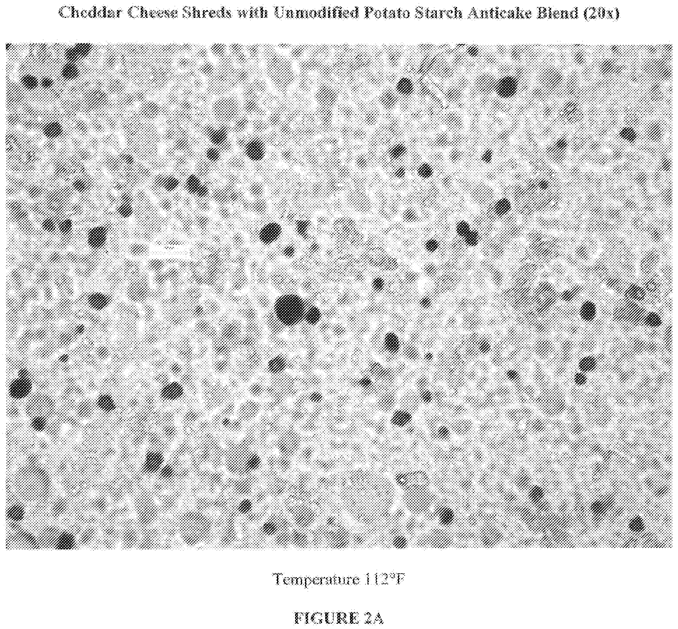

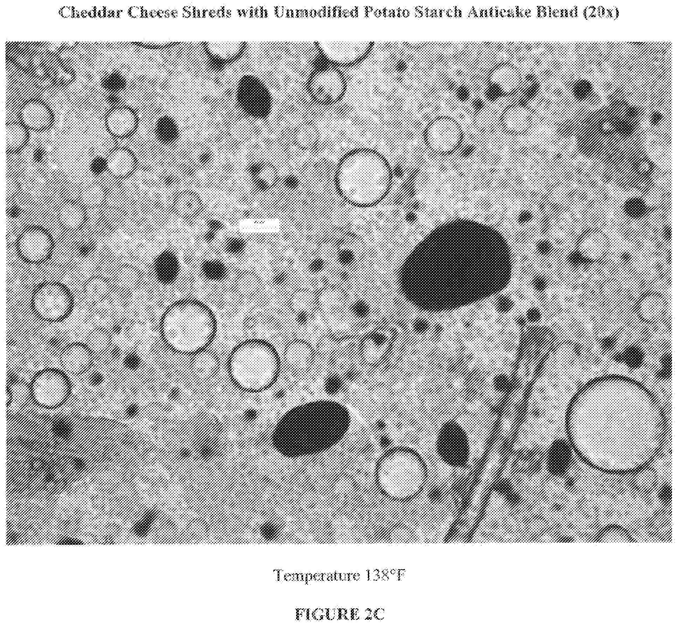

FIGS. 2A -2F are micrographs of the cheese mixture prepared using cheese shreds coated with Comparative Anticake C at each of the temperature points. Starch granule swelling begins to be evident at 59°C (138°F) in FIG. 2C and continues to swell at 76°C (168°F), FIG. 2F. As illustrated in FIGS. 2A-2F, the starch granules maintain their shape as swelling increases. The starch granules of Anticake C do not rupture, degrade, or dissipate.

When combined with water and heated, the cheese shreds with Comparative Anticake C appeared to melt smoothly. However, this cheese sauce has an unsatisfactory, pasty and/or grainy mouth feel, starchy off-flavor, and decreased overall cheese flavor.

It is believed that because the gelatinized native potato starch granules of Anticake C swell to a large size and remain large without dissipating during the preparation of cheese sauce, their large granule size contributes to the grainy mouthfeel perception, while the granules remaining intact may also cause a starchy off-flavor. Amylose in the native potato starch may also leach out of the starch granule to further contribute starchy off-flavors.

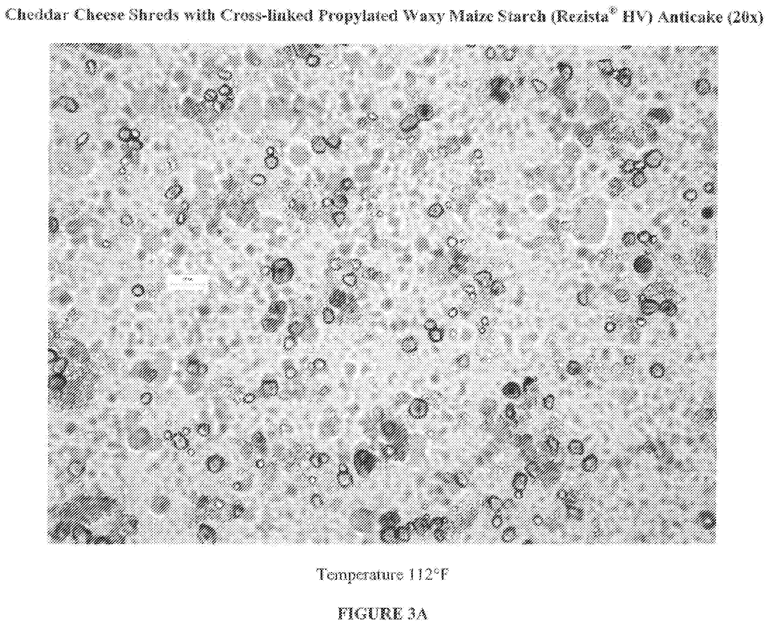

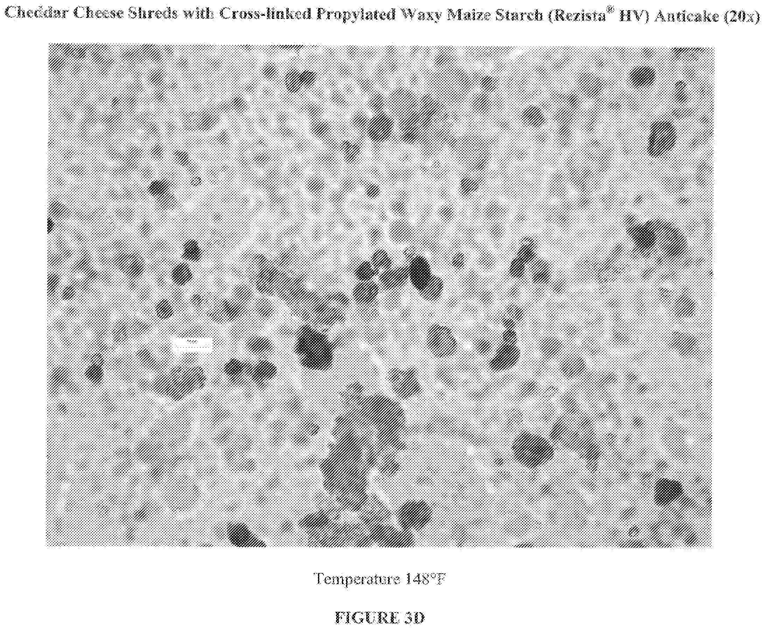

FIGS. 3A-3F are micrographs of the cheese mixture prepared using cheese shreds coated with Anticake B at each of the temperature points. Starch granule swelling begins to swell at 64°C (148°F) in FIG. 3D, and continues to swell at 76°C (168°F) in FIG. 3F. The starch granules maintain their shape and increased swelling size without rupturing, degrading, or dissipating. The starch granules of Anticake B are generally smaller than the starch granules of Comparative Anticake C at corresponding temperatures.

The cheese sauce performance of sauce prepared from cheese shreds coated with Anticake B was improved over the cheese sauce performance of sauce prepared from cheese shreds coated with Comparative Anticake C. Cheese sauce prepared from cheese shreds coated with Anticake B had a grainy mouthfeel and starchy-off flavor, although reduced in comparison to the cheese sauce containing Comparative Anticake C. It is believed that the smaller granular size of waxy maize starch and the absence of amylose in the waxy maize starch results in the improved mouthfeel and flavor over Comparative Anticake C.

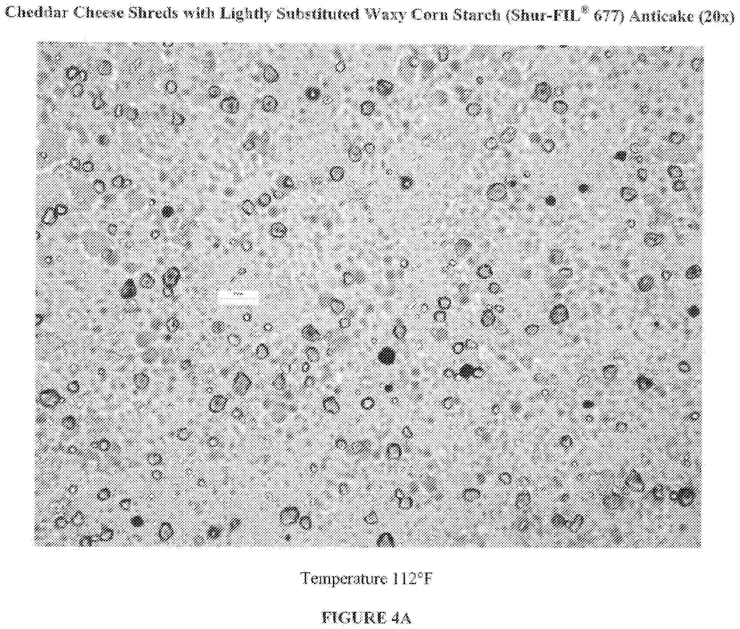

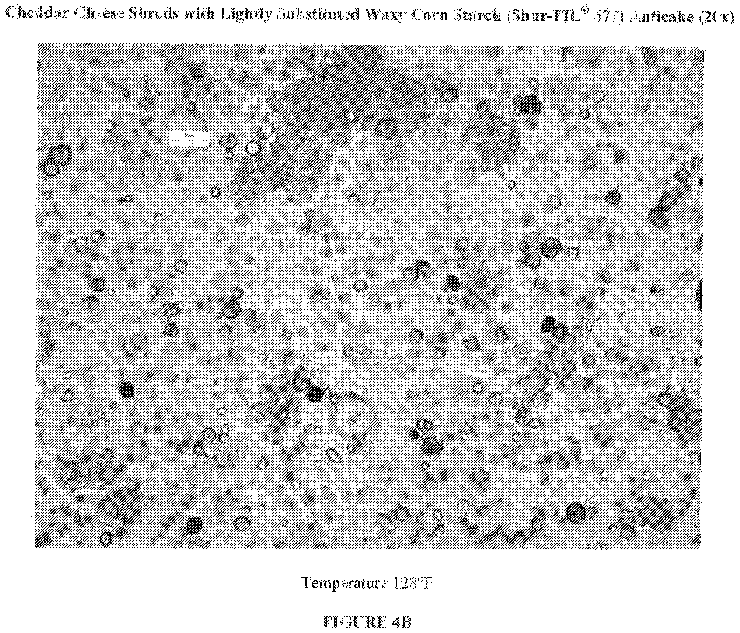

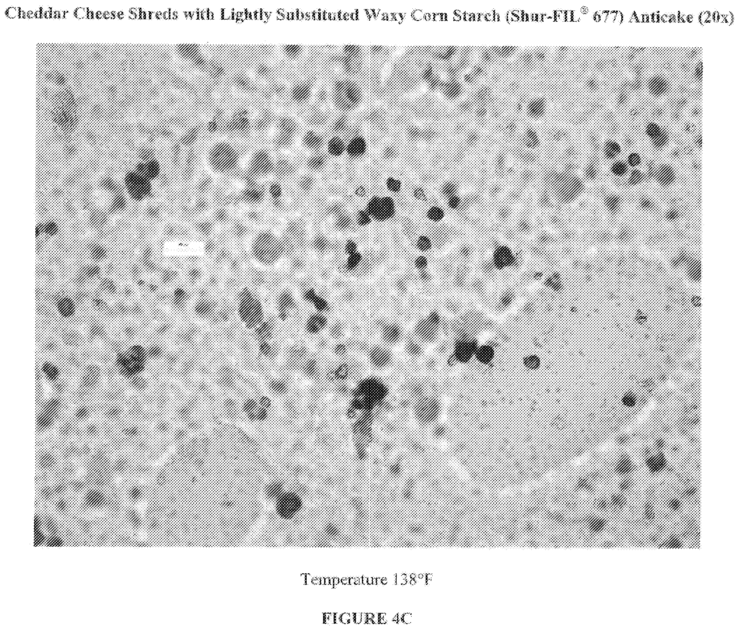

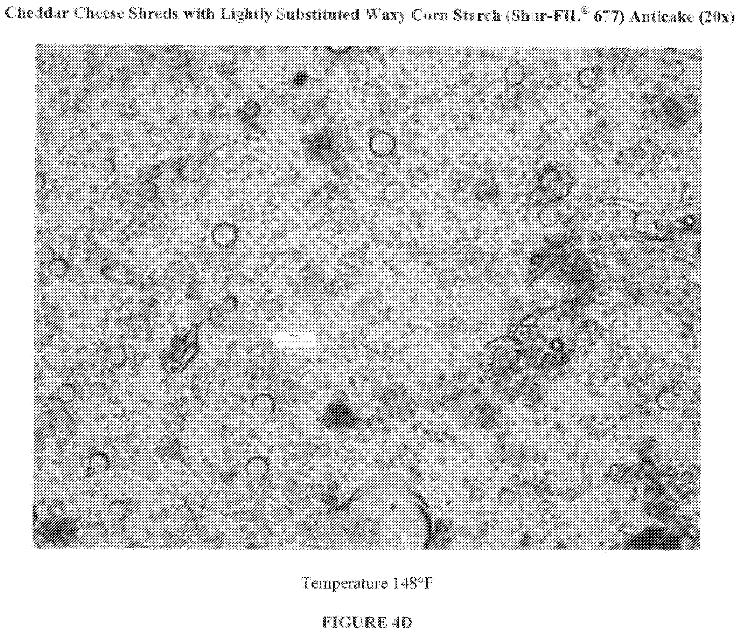

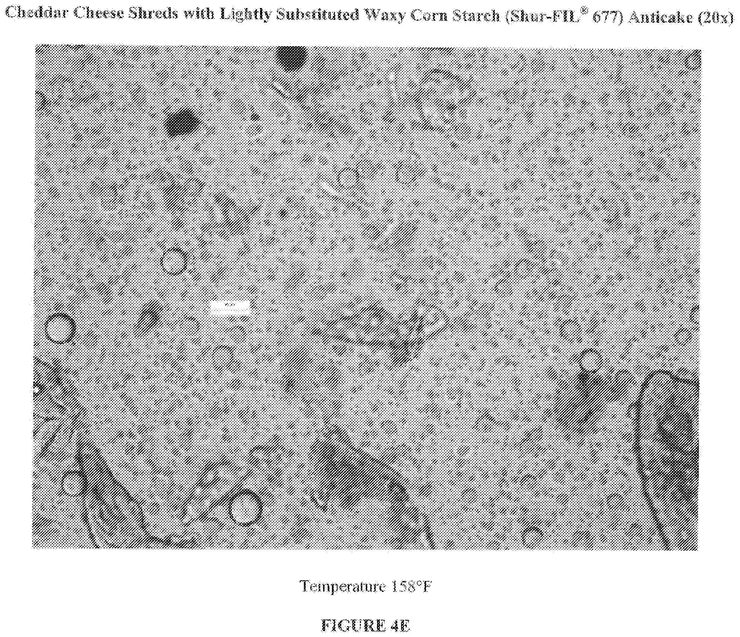

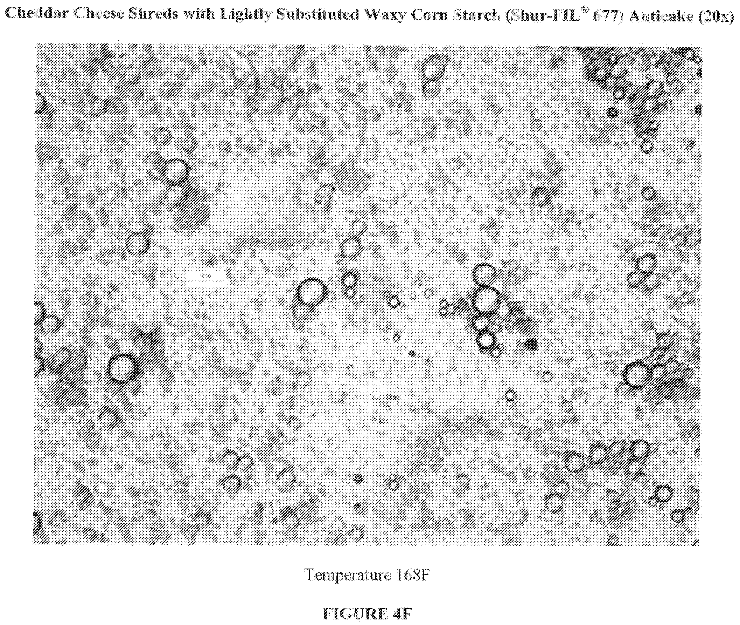

FIGS. 4A-4F are micrographs of the mixture prepared using cheese shreds coated with Inventive Anticake A at each of the temperature points. As seen in FIG. 4C, starch in Anticake A begins to swell at 59°C (138°F), and appears fully cooked at 64°C (148°F), FIG. 4D. As seen in FIG. 4E, most of the granules have ruptured and only fragments of starch granules remain at 70°C (158°F). By 76°C (168°F), FIG. 4F, no granular fragments remain, and the starch has degraded. Amylopectin in the starch is uniformly distributed into the cheese sauce.

The cheese sauce prepared using cheese shreds coated with Anticake A had optimal cheese sauce performance. The cheese shreds melted smoothly into a cheese sauce which did not have a pasty or grainy mouthfeel. The cheese flavor of cheese sauce containing Anticake A was superior to that of cheese sauces containing Anticake B or Anticake C.

It is believed that the low gelatinization temperature of Anticake A allows the granules to swell fully when viscosity contribution is desired for stability during cheese melting, to rupture, and to disperse to yield a smooth cheese sauce with desirable mouthfeel. Because few to no starch granules remain to inhibit cheese flavor release and cause starchy off-flavors, cheese sauce prepared with Anticake A provides desirable cheese flavor with an absence of starchy off-flavors.

It will be understood that various changes in the details, materials, and arrangements of formulations and ingredients, which have been herein described and illustrated in order to explain the nature of the method and compositions, may be made by those skilled in the art within the principle and scope of the description and claims herein.

## Claims

1. A particulate natural cheese product comprising:
a natural cheese including a plurality of particulate natural cheese pieces each having an outer surface thereof;
a modified starch applied to the particulate natural cheese pieces, the modified starch providing intact starch granules including amylopectin and substantially no amylose on the natural cheese pieces effective as an anticaking agent; and
a uniform melt of the natural cheese and a uniform distribution of the amylopectin with substantially no intact starch granules and substantially no starch agglomerates of the amylopectin when the particulate natural cheese is melted.

2. The particulate natural cheese product of claim 1, wherein the modified starch has a peak gelatinization temperature preceding a protein aggregation temperature of the natural cheese effective to interrupt protein agglomeration during melting to provide a smoothly melted cheese.

3. The particulate natural cheese product of claim 2, wherein the peak gelatinization temperature of the modified starch is within+/-6°C (+/-10°F) of the protein aggregation temperature of the natural cheese.

4. The particulate natural cheese product of the claim 2, wherein a ratio of the peak gelatinization temperature of the modified starch to the protein aggregation temperature of the natural cheese is 1:0.8 to 1:3.

5. The particulate natural cheese product of claim 1, wherein the modified starch has a peak gelatinization temperature from 60°C(140°F) to 66°C(150°F) and the natural cheese has a protein aggregation temperature of 49°C(120°F) to 82°C,(180°F) and the modified starch is substituted waxy corn starch having a degree of substitution of less than 0.2 D.S.

6. The particulate natural cheese product of claim 5, wherein the modified starch is fully gelatinized by 77°C (170°F).

7. The particulate natural cheese product of claim 1, wherein the particulate natural cheese product includes 80 to 99 weight percent particulate natural cheese selected from the group consisting of Cheddar Cheese, processed cheese, blended cheese, cheeses with and without emulsifying salts, and mixtures thereof, and 0.1 to 10 weight percent modified starch having less than 0.1 weight percent amylose, wherein the melted natural cheese has less than 10 intact starch granules of amylopectin per 900 mm2 of the melted cheese.

8. The particulate natural cheese product of claim 1, wherein the modified starch exhibits a temperature differential between initial starch gelatinization and full gelatinization of 6°C to 17°C (10°F to 30°F).

9. A method of melting a particulate natural cheese product having a modified starch anticaking agent thereon, the method comprising:
providing a particulate natural cheese including a plurality of natural cheese pieces each having an outer surface thereof, the particulate natural cheese pieces including a modified starch providing intact starch granules including amylopectin and substantially no amylose on the natural cheese pieces effective as an anticaking agent;
heating the particulate natural cheese for a time and temperature effective to melt the cheese into a melted mixture with a uniform melt of the natural cheese and a uniform distribution of the amylopectin with substantially no intact starch granules and substantially no starch agglomerates of the amylopectin in the melted cheese

10. The method of claim 9, wherein the modified starch has a peak gelatinization temperature overlapping the protein aggregation temperature of the natural cheese effective to interrupt protein agglomeration during melting to provide a smoothly melted cheese.

11. The method of claim 10, wherein the peak gelatinization temperature of the modified starch is within +/-6°C (10°F) of the protein aggregation temperature of the natural cheese.

12. The method of the claim 10, wherein a ratio of the peak gelatinization temperature of the modified starch to the protein aggregation temperature of the natural cheese is 1:0.8 to 1:3.

13. The method of claim 11, wherein the modified starch has a peak gelatinization temperature from 60°C(140°F) to 66°C(150°F) and the natural cheese has a melting point of 49°C(120°F) to 82°C(180°F).

14. The method of claim 12, wherein the modified starch is fully gelatinized by *77°C*(170°F).

15. The method of claim 1, wherein the particulate natural cheese product includes 80 to 99 weight percent particulate natural cheese selected from the group consisting of Cheddar Cheese, processed cheese, blended cheese, cheeses with and without emulsifying salts, and mixtures thereof, and 0.1 to 10 weight percent modified starch having less than 0.1 weight percent amylose.

## Patentansprüche

1. Partikuläres Naturkäseprodukt, Folgendes umfassend:
einen Naturkäse, der mehrere partikuläre Naturkäsestücke, die jeweils eine Außenoberfläche davon aufweisen, enthält;
eine modifizierte Stärke, aufgebracht auf die partikulären Naturkäsestücke, wobei die modifizierte Stärke intakte als Antibackmittel wirksame Stärkekörner, die Amylopektin und im Wesentlichen keine Amylose enthalten, auf den Naturkäsestücken bereitstellt; und
ein gleichmäßiges Schmelzverhalten des Naturkäses und eine gleichmäßige Verteilung des Amylopektins im Wesentlichen ohne intakte Stärkekörner und im Wesentlichen ohne Stärkeagglomerate des Amylopektins, wenn der partikuläre Naturkäse geschmolzen ist.

2. Partikuläres Naturkäseprodukt nach Anspruch 1, wobei die modifizierte Stärke eine Spitzengelatinierungstemperatur aufweist, die einer Proteinaggregationstemperatur des Naturkäses vorausgeht, wirksam, um Proteinagglomeration beim Schmelzen zu unterbrechen, um einen glatt geschmolzenen Käse bereitzustellen.

3. Partikuläres Naturkäseprodukt nach Anspruch 2, wobei die Spitzengelatinierungstemperatur der modifizierten Stärke innerhalb von +/-6 °C (+/-10 °F) der Proteinaggregationstemperatur des Naturkäses liegt.

4. Partikuläres Naturkäseprodukt nach Anspruch 2, wobei ein Verhältnis der Spitzengelatinierungstemperatur der modifizierten Stärke zur Proteinaggregationstemperatur des Naturkäses 1:0,8 bis 1:3 beträgt.

5. Partikuläres Naturkäseprodukt nach Anspruch 1, wobei die modifizierte Stärke eine Spitzengelatinierungstemperatur von 60 °C (140 °F) bis 66 °C (150 °F) aufweist und der Naturkäse eine Proteinaggregationstemperatur von 49 °C (120 °F) bis 82 °C, (180 °F) aufweist und die modifizierte Stärke substituierte Wachsmaisstärke mit einem Substitutionsgrad von unter 0,2 D.S. (*degree of substitution*) ist.

6. Partikuläres Naturkäseprodukt nach Anspruch 5, wobei die modifizierte Stärke bei 77 °C (170 °F) vollständig geliert ist.

7. Partikuläres Naturkäseprodukt nach Anspruch 1, wobei das partikuläre Naturkäseprodukt Folgendes enthält: 80 bis 99 Gewichtsprozent partikulären Naturkäse, ausgewählt aus der Gruppe bestehend aus Cheddarkäse, Schmelzkäse, Mischkäse, Käse mit und ohne Schmelzsalzen, sowie Mischungen daraus, und 0,1 bis 10 Gewichtsprozent modifizierte Stärke mit weniger als 0,1 Gewichtsprozent Amylose, wobei der geschmolzene Naturkäse weniger als 10 intakte Stärkekörner von Amylopektin pro 900 mm² des geschmolzenen Käses aufweist.

8. Partikuläres Naturkäseprodukt nach Anspruch 1, wobei die modifizierte Stärke eine Temperaturdifferenz zwischen anfänglicher Stärkegelatinierung und vollständiger Gelatinierung von 6 °C bis 17 °C (10 °F bis 30 °F) aufweist.

9. Verfahren zum Schmelzen eines partikulären Naturkäseprodukts mit einem modifizierte-Stärke-Antibackmittel darauf, wobei das Verfahren Folgendes umfasst:
Bereitstellen eines partikulären Naturkäses, der mehrere Naturkäsestücke, die jeweils eine Außenoberfläche davon aufweisen, enthält, wobei die partikulären Naturkäsestücke eine modifizierte Stärke enthalten, die intakte als Antibackmittel wirksame Stärkekörner, die Amylopektin und im Wesentlichen keine Amylose enthalten, auf den Naturkäsestücken bereitstellt;
Erwärmen des partikulären Naturkäses im Laufe einer Zeit und auf eine Temperatur, die wirksam ist, den Käse in eine geschmolzene Mischung mit einem gleichmäßigen Schmelzverhalten des Naturkäses und einer gleichmäßigen Verteilung des Amylopektins im Wesentlichen ohne intakte Stärkekörner und im Wesentlichen ohne Stärkeagglomerate von Amylopektin im geschmolzenen Käse zu schmelzen.

10. Verfahren nach Anspruch 9, wobei die modifizierte Stärke eine Spitzengelatinierungstemperatur aufweist, die sich mit der Proteinaggregationstemperatur des Naturkäses überschneidet, wirksam, um Proteinagglomeration beim Schmelzen zu unterbrechen, um einen glatt geschmolzenen Käse bereitzustellen.

11. Verfahren nach Anspruch 10, wobei die Spitzengelatinierungstemperatur der modifizierten Stärke innerhalb von +/-6 °C (10 °F) der Proteinaggregationstemperatur des Naturkäses liegt.

12. Verfahren nach Anspruch 10, wobei ein Verhältnis der Spitzengelatinierungstemperatur der modifizierten Stärke zur Proteinaggregationstemperatur des Naturkäses 1:0,8 bis 1:3 beträgt.

13. Verfahren nach Anspruch 11, wobei die modifizierte Stärke eine Spitzengelatinierungstemperatur von 60 °C (140 °F) bis 66 °C (150 °F) aufweist und der Naturkäse einen Schmelzpunkt von 49 °C (120 °F) bis 82 °C (180 °F) aufweist.

14. Verfahren nach Anspruch 12, wobei die modifizierte Stärke bei 77 °C (170 °F) vollständig geliert ist.

15. Verfahren nach Anspruch 1, wobei das partikuläre Naturkäseprodukt Folgendes enthält: 80 bis 99 Gewichtsprozent partikulären Naturkäse, ausgewählt aus der Gruppe bestehend aus Cheddarkäse, Schmelzkäse, Mischkäse, Käse mit und ohne Schmelzsalzen, sowie Mischungen daraus, und 0,1 bis 10 Gewichtsprozent modifizierte Stärke mit weniger als 0,1 Gewichtsprozent Amylose.

## Revendications

1. Produit de fromage naturel particulaire comprenant :
un fromage naturel comportant une pluralité de morceaux de fromage naturel particulaire ayant chacun une surface extérieure de celui-ci ;
un amidon modifié appliqué aux morceaux de fromage naturel particulaire, l'amidon modifié fournissant des granules d'amidon intacts comportant de l'amylopectine et sensiblement aucune amylose sur les morceaux de fromage naturel efficaces en tant qu'agent antiagglomérant ; et
une fonte uniforme du fromage naturel et une répartition uniforme de l'amylopectine sensiblement sans granules d'amidon intacts et sensiblement sans agglomérats d'amidon de l'amylopectine lorsque le fromage naturel particulaire est fondu.

2. Produit de fromage naturel particulaire selon la revendication 1, dans lequel l'amidon modifié a une température de gélatinisation de crête précédant une température d'agrégation de protéine du fromage naturel efficace pour interrompre l'agglomération de protéine pendant la fonte pour fournir un fromage fondu de manière homogène.

3. Produit de fromage naturel particulaire selon la revendication 2, dans lequel la température de gélatinisation de crête de l'amidon modifié est à moins de +/-6 °C (+/-10 °F) de la température d'agrégation de protéine du fromage naturel.

4. Produit de fromage naturel particulaire selon la revendication 2, dans lequel un rapport entre la température de gélatinisation de crête de l'amidon modifié et la température d'agrégation de protéine du fromage naturel est de 1:0,8 à 1:3.

5. Produit de fromage naturel particulaire selon la revendication 1, dans lequel l'amidon modifié a une température de gélatinisation de crête de 60 °C (140 °F) à 66 °C (150 °F) et le fromage naturel a une température d'agrégation de protéine de 49 °C (120 °F) à 82 °C (180 °F) et l'amidon modifié est un amidon de maïs cireux substitué ayant un degré de substitution de moins de 0,2 D.S.

6. Produit de fromage naturel particulaire selon la revendication 5, dans lequel l'amidon modifié est totalement gélatinisé à 77 °C (170 °F).

7. Produit de fromage naturel particulaire selon la revendication 1, dans lequel le produit de fromage naturel particulaire comporte 80 à 99 pour cent en poids de fromage naturel particulaire choisi dans le groupe constitué du Cheddar, d'un fromage fondu, d'un fromage de mélange, de fromages avec ou sans sels émulsifiants, et des mélanges de ceux-ci, et 0,1 à 10 pour cent en poids d'amidon modifié ayant moins de 0,1 pour cent en poids d'amylose, dans lequel le fromage naturel fondu a moins de 10 granules d'amidon intacts d'amylopectine par 900 mm² du fromage fondu.

8. Produit de fromage naturel particulaire selon la revendication 1, dans lequel l'amidon modifié présente un différentiel de température entre la gélatinisation d'amidon initiale et la gélatinisation totale de 6 °C à 17 °C (10 °F à 30 °F).

9. Procédé de fonte d'un produit de fromage naturel particulaire sur lequel se trouve un agent anti-agglomérant d'amidon modifié, le procédé comprenant :
la fourniture d'un fromage naturel particulaire comportant une pluralité de morceaux de fromage naturel ayant chacun une surface extérieure de celui-ci, les morceaux de fromage naturel particulaire comportant un amidon modifié fournissant des granules d'amidon intacts comportant de l'amylopectine et sensiblement aucune amylose sur les morceaux de fromage naturel efficaces en tant qu'agent antiagglomérant ;
le chauffage du fromage naturel particulaire pendant une durée et une température efficaces pour faire fondre le fromage en un mélange fondu avec une fonte uniforme du fromage naturel particulaire et une répartition uniforme de l'amylopectine sensiblement sans granules d'amidon intacts et sensiblement sans agglomérats d'amidon de l'amylopectine dans le fromage fondu.

10. Procédé selon la revendication 9, dans lequel l'amidon modifié a une température de gélatinisation de crête chevauchant la température d'agrégation de protéine du fromage naturel efficace pour interrompre l'agglomération de protéine pendant la fonte pour fournir un fromage fondu de manière homogène.

11. Procédé selon la revendication 10, dans lequel la température de gélatinisation de crête de l'amidon modifié est à moins de +/-6 °C (+/-10 °F) de la température d'agrégation de protéine du fromage naturel.

12. Procédé selon la revendication 10, dans lequel un rapport entre la température de gélatinisation de crête de l'amidon modifié et la température d'agrégation de protéine du fromage naturel est de 1:0,8 à 1:3.

13. Procédé selon la revendication 11, dans lequel l'amidon modifié a une température de gélatinisation de crête de 60 °C (140 °F) à 66 °C (150 °F) et le fromage naturel a un point de fusion de 49 °C (120 °F) à 82 °C (180 °F).

14. Procédé selon la revendication 12, dans lequel l'amidon modifié est totalement gélatinisé à 77 °C (170 °F).

15. Procédé selon la revendication 1, dans lequel le produit de fromage naturel particulaire comprend 80 à 99 pour cent en poids de fromage naturel particulaire choisi dans le groupe constitué du Cheddar, d'un fromage fondu, d'un fromage de mélange, de fromages avec et sans sels émulsifiants, et des mélanges de ceux-ci, et 0,1 à 10 pour cent en poids d'amidon modifié ayant moins de 0,1 pour cent en poids d'amylose.
